# EUROPÄISCHE PATENTANMELDUNG

(11) **EP 0 802 332 A1**
(43) Veröffentlichungstag der Anmeldung: **22.10.1997**
(21) Anmeldenummer: 97810189.7
(22) Anmeldetag: 01.04.1997
(51) Int. Cl.: F16B 2/06, F16M 13/02, E04G 7/02

(54) **Aufhänger für Einhängeelemente**

(30) Priorität: 20.04.1996 DE 19615785
(71) Anmelder: Diethelm & Co. AG, 8302 Kloten (CH)
(72) Erfinder: Jehle, Ulrich, 3275 Etzgen (CH)
(74) Vertreter: Patentanwaltsbüro Feldmann AG

(57) **Zusammenfassung**

Ein Aufhänger (1) ist an einem rohrförmigen Träger (3) montiert und seitlich klemmend gehalten. Zwischen dem Träger (3) und dem Aufhänger (1) sind zwei Einhängestellen (A) gebildet. In diese Einhängestellen (A) ist je ein Einhängelement (2) eingehängt. Im dargestellten Beispiel sind dies ein Einhängehacken (2) oder eine Einhängekorb (2').

## Beschreibung

Die Erfindung betrifft einen Aufhänger für Einhängeelemente nach dem Oberbegriff des Patentanspruches 1.

Aus EP 0 038 229 ist ein Aufhänger für Einhängelemente bekannt, welcher aus zwei scharnierartig verbindbaren Halbschalen besteht und dazu dient, mittels einer ersten Aussparung an einem feststehenden rohrförmigen Bau- oder Trägerelement befestigt zu werden. Es ist mit einer zweiten Aussparung zur Aufnahme eines Paneels, insbesondere eines Elementes zum Einhängen, versehen. Die Halbschalen umfassen im monierten Zustand das rohrförmige Trägerelement klemmend wobei das Element zum Einhängen eingehängt drehbar bereits darin befestigt ist. Der Vorteil, der Drehbarkeit des eingehängten Paneels oder Einhängeelementes wird erkauft dadurch, dass die Halbschalen auf dem rohrfömigen Trägerelement nach der Montage nicht mehr ohne weiteres verschoben werden können, da das Gewicht eines eingehängten Teiles bereits mitgetragen werden muss. Ein Befestigen am rohrförmigen Träger mit erst anschliessendem Einhängen eines Einhängeelementes ist nicht möglich. Ebensowenig die Verwendung für zwei Einhängelemente gleichzeitig, da dann das Festklemmen am rohrförmigen Träger nicht mehr einwandfrei gewährleistet wäre.

Aus GB 2 231 366 A ist ein Aufhänger für Einhängeelmente bekannt, welcher an einem rohrförmigen Träger festklemmbar ist. Ein Klemmelement weist mindestens eine Ausnehmung zur Aufnahme eines Einhängeelmentes auf. Der Aufhänger wird um einen rohrförmigen Träger gelegt und mit seinen beiden freien Enden zusammengedrückt, wobei die freien Enden als Verschluss für den Aufhänger dienen und einschnappen. Dadurch wird der Aufhänger am Träger festgeklemmt. Das Klemmelement weist im montierten Zustand zwei, durch Wandungen definierte und einander etwa gegenüberliegende, Ausnehmungen zur Aufnahme von mindestens einem Einhängelement auf.

Aufgabe der Erfindung ist es, einen an einem rohrförmigen Träger festklemmbaren Aufhänger zu schaffen, welcher zuerst am rohrförmigen Träger festgeklemmt und erst anschliessend mit mindestens einem Einhängeelement versehen werden kann. Er soll auf dem Träger verschiebbar und auch wieder leicht lösbar sein. Diese Aufgabe stellt sich im besonderen beispielsweise bei Transportwagen für Reinigungsgeräte, welche Stossbügel, Holme oder dergleichen, welche als Träger benützt werden können, aufweisen.

Diese Aufgabe wird durch die in dem Patentanspruch 1 angegebenen Merkmale gelöst.

Ein zusätzlicher Vorteil der Erfindung ist, dass solche Aufhänger am Rohr der Stossbügel an geeigneten Orten, in gewünschter Höhe am Rohr, befestigt werden, worauf Einhängehacken zum Einhängen einer Last oder beispielsweise auch mit Einhängehacken versehene Warenkörbe eingehängt werden können.

Ein weiterer Vorteil der Erfindung besteht darin, dass die Befestigungsstelle, das heisst die Anordnungshöhe, an den Rohren der Stossbügel verstellbar ist, bevor die Warenkörbe eingehängt werden. Dadurch können auch mehr als ein Aufhänger und damit mehr als ein Warenkorb übereinander angeordnet eingehängt werden.

Die Erfindung wird nachstehend im Zusammenhang mit den Zeichnungen beschrieben. Es zeigen:
- Figur 1: eine perspektivische Ansicht eines montierten Aufhängers;
- Figur 2: einen Querschnitt durch einen an einem Träger montierten Aufhänger;
- Figur 3: einen Längsschnitt durch den Aufhänger;
und
- Figur 4: eine Ansicht des Schliessteils;

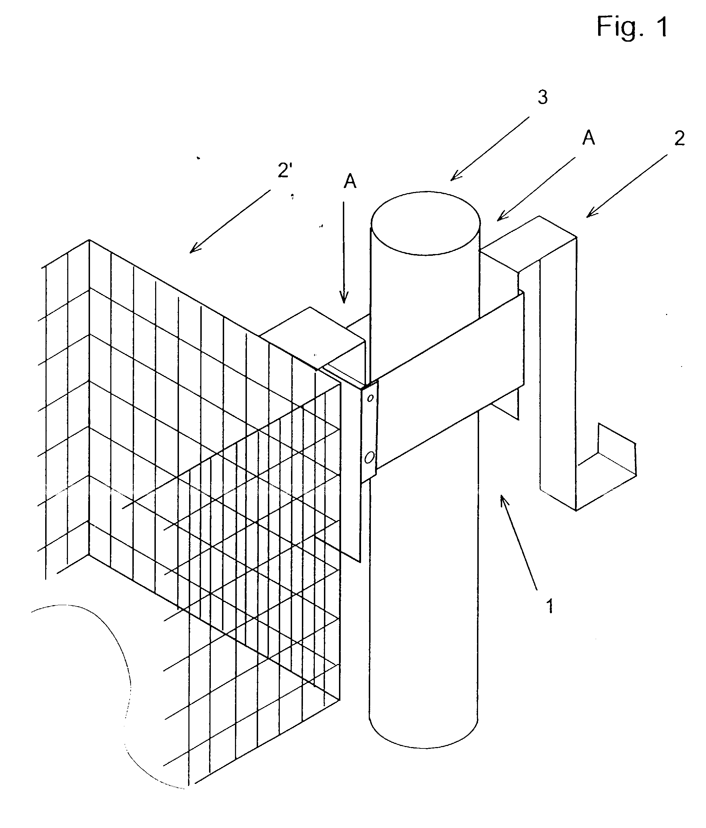

In Figur 1 ist ein erfindungsgemässer Aufhänger 1 in perspektivischer Ansicht dargestellt. Er ist an einem rohrförmigen Träger 3 montiert und seitlich klemmend gehalten. Zwischen dem Träger 3 und dem Aufhänger 1 sind zwei Einhängestellen A gebildet. In diese Einhängestellen A ist je ein Einhängelement 2 eingehängt. Im dargestellten Beispiel sind dies ein Einhängehacken 2 oder eine Einhängekorb 2'.

Im Querschnitt durch den erfindungsgemässen Aufhänger 1 ist das Prinzip des Festklemmens an einem rohrförmigen Träger 3 gut ersichtlich. Der Aufhänger 1 besteht aus einem U-förmigen Federelement 11 als Klemmelement und einem, dieses auf seiner offenen Seite teilweise umfassenden, ebenfalls U-förmigen, Schliessteil 15.

Das Federelement 11 weist eine Rückwand 111 und zwei seitlich im Winkel daran anschliessende freie Seitenwände 112, 113 auf. Die beiden freien Seitenwände bilden eine gegen innen gerichtete erste Klemmwange 131 und zweite Klemmwange 132. Die freien Seitenwände 112, 113 sind im Bereich der Klemmwangen 131 und 132 in der Form annähernd an einen zu klemmenden Träger 3 angepasst, damit sie im montierten, klemmenden Zustand einen guten Halt am Träger garantieren. Die freien Seitenwände 112, 113 bilden aussenseitig, gegen die freien Ende hin je eine Verschlusswange 114. Die Verschlusswangen 114 wirken in Verbindung mit dem anschliessend beschriebenen Schliessteil 15. Sie werden beim Schliessen des Aufhängers 1 durch den Schliessteil 15 etwas zusammengedrückt, wodurch sich der Innenraum des Federelementes 11 verkleinert und die erste und die zweite Klemmwange 131, 132 an den Träger 3 angepresst werden.

Der Schliessteil 15 ist ebenfalls U-förmig ausgestaltet und weist eine Wand 151 und zwei im Winkel daran anschliessende freie Schenkel 152, 153 auf. Er umfasst mit seinen freien Schenkeln 152, 153 das offene Ende des Federelementes 11 tei!weise und ist an diesem schwenkbar befestigt.

Ein Sicherungsbolzen 16 durchstösst sowohl den Schliessteil 15, wie auch das Federelement 11. Er weist endständig verbreiterte Abschlussköpfe 162 auf, um gegen Herausschieben gesichert zu sein. Der Sicherungsbolzen 16 kann auch ein durchstossbarer Bolzen mit nur einem Abschlusskopf 162 sein, welcher im durchgestossenen Zustand am, dem Abschlusskopf gegenüberliegenden, Ende mittels einem Splinten oder einer Mutter gesichert wird.

Das Federelement 11 und der Schliessteil 15 bilden zusammen im Inneren einen etwa rechteckigen Ausschnitt, worin der rohrförmige Träger 3 festgeklemmt wird. Federelement 11 und Schliessteil 15 sind so dimensioniert, dass, im an einem Träger 3 festgeklemmten Zustand, mindestens zwischen dem Träger 3 und der Rückwand 111 des Federelementes 11 eine Ausnehmung 121 entsteht. Diese Ausnehmung 121 dient zur Aufnahme, das heisst zum Einschieben eines Einhängelementes 2,2', beispielsweise eines Einhänghakens oder Einhängewinkels.

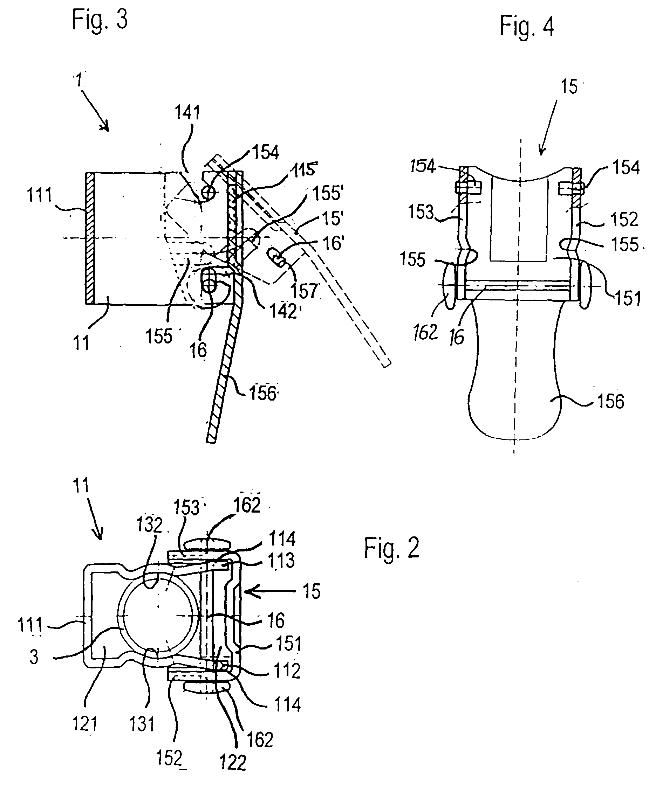

Das Federelement 11 ist in der Figur 3 im Zusammenhang mit dem Schliessteil 15 in geschlossener Stellung und mit dem Schliessteil 15' in geöffneter Stellung im Querschnitt dargestellt. Dabei ist die Rückwand 111 geschnitten und die freie Seitenwand 112 in Ansicht von innen her gezeichnet.

Gut ersichtlich ist ein erster Ausschnitt 141, welcher als Mittel zur schwenkbaren Verbindung des Federelementes 11 mit dem entsprechenden Gegenstück in Form eines Schwenknockens 154 am freien Schenkel 152 des Schliessteiles 15 dient. In der, als nach oben offene Ausnehmung, dargestellten Ausführung kann der Schliessteil 15 auf einfache Weise von oben her in das Federelement 11 eingeführt und da schwenkbar eingehängt werden. Der Schliessteil 15 kann somit entweder fest,beispielsweise mit Nieten, oder lösbar, aber immer schwenkbar, am Federelement 11 befestigt sein. In der geschlossenen Stellung drückt der Schliessteil 15 das Federelement 11, wie oben beschrieben ist, etwas zusammen. Dazu ist er mit je einer Klemmrippe 155 innenseitig an beiden freien Schenkeln 152, 153 versehen.

Die Klemmrippen 155 ragen von den freien Schenkeln 152, 153 nach innen und sind so in der geschlossenen Stellung in direktem Kontakt mit den zugehörenden Verschlusswangen 114. Im geöffneten Zustand des Aufhängers ist das Schliessteil 15 als Schliessteil 15' unten um die Schwenknocken 154 nach auswärts geschwenkt. Dabei sind die Klemmrippen 155 nicht in Kontakt mit den Klemmwangen 131, 132 und das Federelement vergrössert den Abstand zwischen seinen freien Seitenwänden 112 und 113 mindestens im Bereich der Verschlusswangen 114.

Jede freie Seitenwand 112, 113 ist im unteren Bereich, etwa dem ersten Ausschnitt 141 gegenüberliegend, mit einem ersten Sicherungsausschnitt 142 versehen. Der Sicherungsausschnitt 142 ist gegen die Stirnseite der freien Seitenwand 112, 113 offen. Er führt von dort zuerst etwas einwärts in Richtung zur Rückwand 111 und anschliessend etwa in rechtem Winkel nach unten. Er ist zur Aufnahme des Sicherungsbolzens 16 bestimmt. Im Schliessteil 15 befindet sich in jedem freien Schenkel ein zweiter Sicherungsausschnitt 157. Dieser hat die Form eines länglichen, von oben nach unten gerichteten Schlitzes, welcher ebenfalls zur Aufnahme des Sicherungsbolzens 16 dient. Wegen der schlitzartigen Ausführung, kann der Sicherungsbolzen sich darin aufwärts und abwärts leicht verschieben.

Beim Einschwenken des Schliessteiles 15, respektive beim Befestigen des Aufhängers 1, wird nun von Hand der Sicherungsbolzen in den zweiten Sicherungsausschnitten 157 etwas angehoben, so dass er schliesslich in die ersten Sicherungsausschnitte 142 hineingeschoben wird. Dabei klemmt der Schliessteil 15 die freien Seitenwände 112, 113 an den Verschlusswangen 114 etwas zusammen, wodurch der Aufhänger 11 an einem Träger 3 festgeklemmt wird. Anschliessend bewegt sich der Sicherungsbolzen durch sein Eigengewicht oder von Hand geschoben innerhalb den ersten und zweiten Sicherungsausschnitten 142, 157 nach unten. Dadurch wird der Sicherungsbolzen in den nach unten reichenden Teil der zweiten Sicherungsausschnitte 142 bewegt und verhindert somit ein unbeabsichtigtes Ausschwenken des Schliessteiles 15. Der Aufhänger ist somit am Träger 3 festgeklemmt gehalten und verriegelt.

Das Schliesselement 15 ist in der Figur 4 von innerhalb dem Federelement 11 her gesehen gezeigt. Es weist eine Verlängerung seiner Rückenplatte 151 nach unten auf und bildet damit einen Betätigungsgriff 156. An jedem freien Schenkel 152, 153 ist ein Schwenknocken 154 angeordnet, welcher einwärts weist. Es ist offensichtlich, dass dies auch ein durchgehender Schwenkbolzen sein kann. Weiter unten weisen die beiden freien Schenkel 152, 153 eine leicht einwärts geknickte Wölbung auf. Diese Wölbungen liegen einander gegenüber und bilden die Klemmrippen 155. Diese Klemmrippen 155 können natürlich auch als verdickte Stellen ausgebildet und beispielsweise einfach als kurze Schweissnaht aufgebracht sein.

Der Aufhänger 1 mit dem Federelement 11 und dem Schliessteil 15 bildet im geschlossenen Zustand, von oben gesehen, etwa ein Rechteck, welches etwa in der Mitte der rohrförmige Träger 3 ausgefüllt ist. Dadurch wird beidseits des Trägers 3 innerhalb dem Aufhänger 1, durch dessen Wände umschrieben, je eine Ausnehmung 121 und 122 als von oben nach unten frei durchgehende, diametral gegenüberliegende Oeffnung gebildet. Diese Ausnehmungen 121 und 122 dienen zur Aufnahme der Einhängelemente 2, welche einfach von ober her eingeschoben werden können und somit mittels dem Aufhänger 1 am Träger 3 getragen und gehalten werden.

In weiteren Ausführungsvarianten kann der Aufhänger 1 mit beispielsweise einem festen Haken versehen sein. Diese können mit dem Federelement 11 und oder dem Schliessteil 15 einstückig ausgeführt werden oder daran angeschweisst oder angeklebt sein. Durch Kombination von einhängbaren Einhängeelementen 2 und angeschweissten oder angeformten Haken als Befestigungselemente kann das Einsatzspektrum des Aufhängers noch wesentlich erweitert werden. Beispielsweise können die oben beschriebenen Körbe eingehängt werden und zusätzlich an den angeschweissten Haken beispielsweise Werkzeuge lösbar befestigt werden, wobei diese Haken mit für das zu verwendende Werkzeug speziell geformt sein kann.

## Patentansprüche

1. Aufhänger für Einhängeelemente (2), welcher an einem rohrförmigen Träger (3) festklemmbar ist, und aus einem Klemmelement mit mindestens eine Ausnehmung (121), zur Aufnahme von mindestens einem Einhängelement (2), und einem Schliessteil (15) besteht, dadurch gekennzeichnet, dass das Klemmelement ein U-förmiges Federelement (11) ist, mit einer Rückenwand (111) und zwei freien Seitenwänden (112,113), mit einer ersten Klemmwange (131) und einer zweiten Klemmwange (132), zum klemmenden befestigen am rohrförmigen Träger (3), und mit je einer Verschlusswange (114) aussenseitig an den freien Schenkeln (112,113), und dass das Schliessteil (15) U-förmig ausgestaltet ist, mit einer Rückenplatte (151) und zwei freien Schenkeln (152,153), und mit Mitteln zur schwenkbaren Befestigung an den freien Seitenwänden (112,113) des Federelementes (11) versehen ist, wobei sowohl das Federelement (11), als auch der Schliessteil (15) eine vom rohrförmigen Träger (3) etwa gleich weit entfernte, je eine Ausnehmung (121, 122) zur Aufnahme von mindestens einem Einhängeelement (2) definierende Wand (111,115) aufweisen, wobei die beiden Wände bezüglich dem rohrförmigen Träger (3) einander diametral gegenüberliegend angeordnet sind..

2. Aufhänger nach Anspruch 3, dadurch gekennzeichnet, dass der U-förmige Schliessteil (15) an den freien Schenkeln (152,153) innenseitig Klemmrippen (155) aufweist.

3. Aufhänger nach Anspruch 2, dadurch gekennzeichnet, dass das Federelement (11) im Bereich der freien Seitenwände (112,113) je einen ersten Sicherungsausschnitt (142) und der Schliessteil (15) im Bereich ihrer freien Schenkel (152,153) je einen zweiten Sicherungsausschnitt (157) zur Aufnahme eines Sicherungsbolzens (16) aufweisen.

4. Aufhänger nach Anspruch 3, dadurch gekennzeichnet, dass der Sicherungsbolzen (16) sowohl durch die ersten Sicherungsausschnitte (142), als auch durch die zweiten Sicherungsausschnitte (157) gleichzeitig durchsteckbar ist.

5. Aufhänger nach Anspruch 4, dadurch gekennzeichnet, dass die ersten Sicherungsausschnitte (142) zwei im Winkel zueinander stehende Schenkel aufweisen, wobei je der eine Schenkel die freien Seitenwände (112,113) stirnseitig durchbricht, so dass die Sicherungsausschnitte (142) nach aussen offen sind und dass die zweiten Sicherungsausschnitte (115) in der freien Schenkeln (152,153) des Schliessteils (15) länglich sind, so dass der Sicherungsbolzen (16) darin verschiebbar ist.

6. Aufhänger nach Anspruch 1, dadurch gekennzeichnet, dass er, im an einem Träger (3) montierten Zustand, zwischen seiner Rückwand (111) und dem Träger (3) eine ersten Ausnehmung (121) zur Aufnahme eines Einhängeelementes (2) bildet.

7. Aufhänger nach Anspruch 1, dadurch gekennzeichnet, dass er, im an einem Träger (3) montierten Zustand, zwischen dem Schliessteil (15) und dem Träger (3) eine zweite Ausnehmung (122) zur Aufnahme eines Einhängeelementes (2) bildet.

8. Aufhänger nach einem der Ansprüche 1 bis 7, dadurch gekennzeichnet, dass das Federelement (11) und/oder das Schliessteil (15) mit fest angeordneten Haken versehen ist.

9. Aufhänger nach einem der Ansprüche 1 bis 8, dadurch gekennzeichnet, dass im oberen, dem Schliessteil (15) benachbarten Bereich jeder der beiden freien Seitenwände (112,113) des Federelementes (11) je eine nach oben offene Ausnehmung (141) vorgesehen ist und dass die beiden freien Schenkel (152,153) des Schliessteiles (15) je einen in jeweils eine der Ausnehmungen (141) einhängbaren Achsstummel (154) tragen, die zusammen eine Schwenkachse für das Schliessteil (15) bilden, derart, dass das Schliessteil (15) nach dem Einhängen der Achsstummel schwenkbar mit dem Federelement (11) verbunden und durch Aushängen der Achsstummel (154) aus den Ausnehmungen (141) von dem Federelement (11) leicht lösbar ist.
